# EUROPEAN PATENT SPECIFICATION

(11) **EP 1 763 177 B1**
(45) Date of publication and mention of the grant of the patent: **28.11.2007**
(21) Application number: 06120264.4
(22) Date of filing: 07.09.2006
(51) Int. Cl.: H04L 12/28

(54) **Method of authenticating access points of a wireless network**
Verfahren zur Authentifizierung von Zugangspunkten eines drahtlosen Netzes
Méthode d'authentification des points d'accès d'un réseau sans fil

(30) Priority: 13.09.2005 GB 0518642
(43) Date of publication of application: 14.03.2007
(73) Proprietor: ROKE MANOR RESEARCH LIMITED, Romsey, Hampshire SO51 0ZN (GB)
(72) Inventor: Davis, Simon Paul, Romsey, Hampshire SO51 7LX (GB); Phillips, Ian Lasseter, Romsey, Hampshire SO51 8PN (GB)
(74) Representative: Payne, Janice Julia

(56) References cited:
- US-A1- 2004 098 586
- US-A1- 2005 152 305
- US-A1- 2005 171 720

## Description

This invention relates to a method of authenticating access points on a wireless network.

There are security issues in wireless mobile networking and mobile communications using any wireless technology where the purchase, placement and movement of wireless access points (APs) is outside of the control of an operator of the network. This includes technologies such as wireless local area network (WLAN), Worldwide Interoperability for Microwave Access (WiMAX) and 3^{rd} generation (3G) systems in the case of small portable node Bs (sometimes known as pico-node Bs).

If a rogue AP, or an AP not currently allowed in a particular network, is introduced to a corporate network or other network outside the control of the operator, this may cause problems for the network. A rogue AP includes an AP using a legitimate identity (ID) which has been stolen from another AP. Such a rogue AP may spoof an existing and possibly, pre-authenticated AP, in order to authenticate itself to a trusted controller, such as an authentication, authorisation and accounting server (AAA), but the AP needs to broadcast a unique identity (ID) to operate correctly in the local area.

Methods for authenticating access points on a wireless network are known in the art. For example, the document US-A-2005/0152305 discloses a method for adding new nodes to a wireless ad-hoc backbone network, including the authentication of such nodes by a master authenticator node. The document US-A-2005/0171720 discloses a method for detecting rogue access points of a wireless network, wherein a manager node compares MAC addresses from reported beacons and probe responses with information stored in a database. The document US-A-2004/0098586 discloses a method for fast, secure authentication of a station roaming from one access point to another, wherein access points pre-authenticate with neighbouring access points.

In accordance with a first aspect of the present invention, a method of authenticating access points on a wireless network comprises sending a list of nearest neighbours from a trusted access point to a controller; receiving at the trusted access point, from the controller, test data related to each of the listed nearest neighbours; interrogating each nearest neighbour using its respective test data; comparing a response with an expected response; and returning a reliability indication to the controller.

Optionally, to reduce the amount of signalling, the reliability indication is returned only if an unexpected response is received.

In one embodiment, the list of nearest neighbours is determined by mobile terminals reporting neighbouring access points that they have detected.

By discovering neighbouring access points and reporting them back to the controller, a list can be built up of the nearest neighbours.

Alternatively, the list of nearest neighbours is determined by a neighbour discovery mechanism using network connectivity between access points in the vicinity of the trusted access point.

Preferably, the test data comprises parameters for a single algorithm, or a security algorithm specific to the neighbour.

Preferably, the controller periodically updates the test data.

Preferably, the controller combines reports from a number of trusted access points before disconnecting an access point with an unexpected response.

This prevents one-off errors, perhaps due to transmission conditions, leading to an AP being cut off.

Preferably, the network comprises one of a wireless local area network, a corporate mobile communication system or a second or third generation mobile cellular system where the access point can share public or corporate communication infrastructure.

Preferably, the controller comprises an authentication, authorisation and accounting server.

Preferably, the controller forms part of a mobile communication network.

An example of a method of authenticating access points on a wireless network will now be described with reference to the accompanying drawings in which:
Figure 1 illustrates a system in which the method of the present invention is applied; and,
Figure 2 illustrates a message sequence chart for the method of the present invention

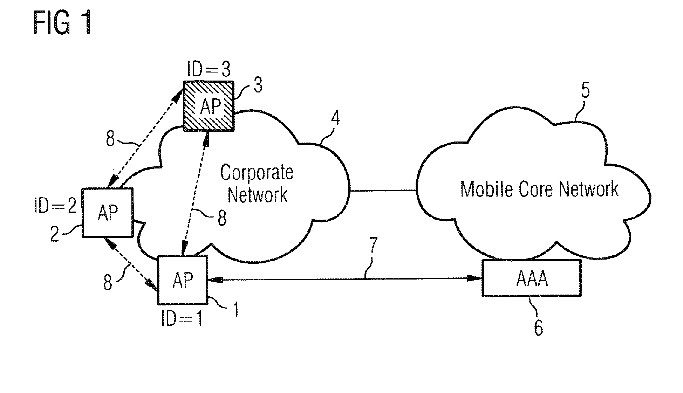

In Fig. 1, a mobile core network 5, controlled by a controller 6, in this case an authentication, authorisation and accounting server, is connected to a corporate network 4 which has a number of access points (AP) 1, 2, 3. The core network 5 is concerned to ensure that all of the access points are valid, so applies the method of the present invention to determine whether this is the case.

Before the controller 6, allows communications from the corporate network 4 to enter the mobile core network 5, each AP 1, 2, 3 must authenticate itself fully with the controller in the trusted mobile core network. For example, AP1 can also provide a list of unique identifiers (ID), and possibly IP addresses, for its nearest neighbours AP 2, 3 to the controller. The list of neighbours can be determined by a neighbour discovery protocol, by radio measurements or via information obtained from mobile terminals. The AAA server then downloads a specific security algorithm, or parameters to use for a single algorithm, for the authenticated AP 1 and each neighbour AP 2, 3 for use in local authentication activities.

The controller may periodically refresh the algorithms and/or parameters passed to each AP which has already been authenticated. Each authenticated AP 1, 2 periodically challenges 8 its neighbouring APs to provide a response vector based on the security algorithm or parameters previously downloaded for that particular neighbour. This algorithm or parameter is compared against the expected responses and if there is a difference, this is reported 7 to the controller 6, indicating that there is a potential rogue AP 3. Assuming that there is more than one authenticated nearest neighbour for a suspect AP, the AAA server, or other node acting as a trusted controller, is then able to combine reports from more than one AP to determine the status of the suspect AP. The controller 6 can then take appropriate action, for example to stop receiving traffic from or forwarding traffic to the suspected AP 3, or to notify neighbour APs 1, 2 not to handover connections to the rogue AP.

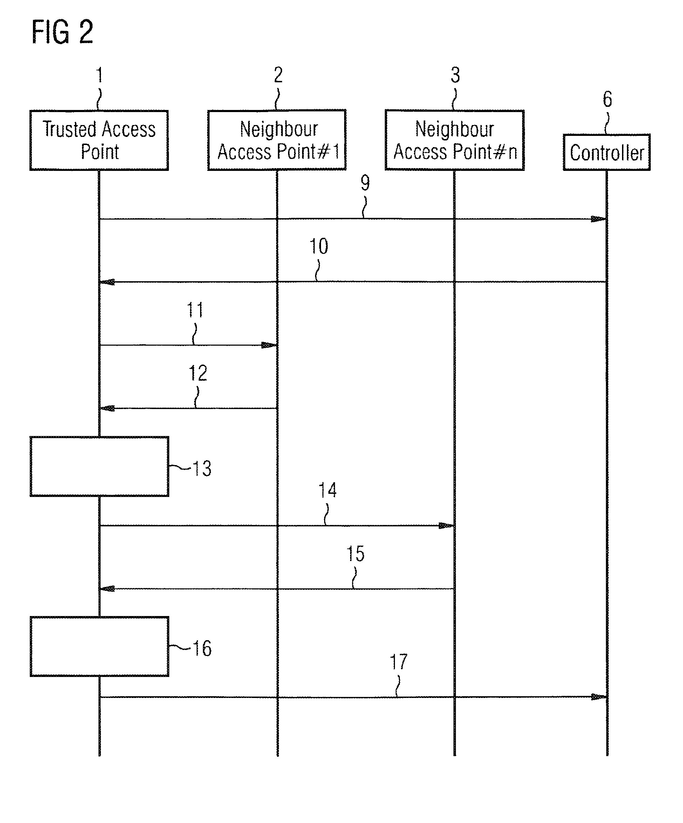

The detailed message sequence is shown in Fig. 2. The authenticated, or trusted, access point 1 sends a list 9 of nearest neighbours, including their identifiers (id), to the controller 6. The controller sends back to the trusted AP, test data 10 in the form of a query and expected response for each nearest neighbour in the list 1 to n. The trusted AP then queries 11 neighbour AP number one 2 with the test data and that AP 2 sends a response 12 to the query to AP1. The trusted AP1 compares the query and the response and finds the result is ok 13. AP1 then queries 14 neighbour number n, 3 with the test data.

AP3 sends a response 15 to AP1 and AP1 compares the query and the response. In this case 16, the result is not ok. The trusted AP works through all n neighbouring APs and then returns reliability indicators 17 for each neighbour to the controller. In this example, the indications given are that neighbour number 1 is ok, but neighbour number n is not ok. If preferred the trusted AP can send back reliability indicators at different times, but this would use more resources.

The reliability indicators may be returned irrespective of the nature of the results, i.e. even if all the tested APs are ok, or else the APs can be set up to only return an indication if at least one result is unexpected.

There are a number of advantages in the approach proposed in the present invention. A more rapid detection of rogue APs is possible, since the challenge and response mechanism is located in the local network and can be as frequent as needed, rather than coming from the core network every time. The load on the AAA server is reduced, since much of the processing is placed in peer-nodes i.e. the neighbours. This is useful when 1000s or 10,000s of APs may be served by one AAA server. Another benefit is the reduction in security related traffic to the AAA server, which may be remote and transported over expensive bearers. The method also enables rogue APs that are spoofing an existing and authenticated AP to be detected, which otherwise might not happen

The invention provides a security mechanism to authenticate access points in wireless networks via peer nodes, or other APs, that have been pre-authenticated with the mobile core network. By proxying the authentication mechanism into the peer APs, detection of rogue APs is faster and both processing load and security related traffic load can be reduced on the central AAA server.

## Claims

1. A method of authenticating access points (1, 2, 3) on a wireless network (4), the method comprising sending (9) a list of nearest neighbours (2, 3) from a trusted access point (1) to a controller (6); receiving (10) at the trusted access point, from the controller, test data related to each of the listed nearest neighbours; interrogating (11, 12, 14, 15) each neighbour using its respective test data; comparing (13, 16) a response with an expected response; and returning (17) a reliability indication to the controller if an unexpected response is received.

2. A method according to claim 1, whereby the list of nearest neighbours is determined by mobile terminals reporting neighbouring access points that they have detected.

3. A method according to claim 1, whereby the list of nearest neighbours is determined by a neighbour discovery mechanism using network connectivity between access points in the vicinity of the trusted access point.

4. A method according to any preceding claim, wherein the test data comprises parameters for a single algorithm, or a security algorithm specific to the neighbour.

5. A method according to any preceding claim, wherein the controller periodically updates the test data.

6. A method according to any preceding claim, wherein the controller combines reports from a number of trusted access points before disconnecting an access point with an unexpected response.

7. A method according to any preceding claim, wherein the network comprises one of a wireless local area network, a corporate mobile communication system or a second or third generation mobile cellular system where the access point can share public or corporate communication infrastructure.

8. A method according to any preceding claim, wherein the controller comprises an authentication, authorisation and accounting server.

9. A method according to any preceding claim, wherein the controller forms part of a mobile communication network.

10. A method according to any preceding claim, wherein the reliability indication is returned only if an unexpected response is received.

## Patentansprüche

1. Verfahren zur Authentifizierung von Zugangspunkten (1, 2, 3) in einem drahtlosen Netz (4), welches Folgendes umfasst: Senden (9) einer Liste von nächsten Nachbarn (2, 3) von einem vertrauenswürdigen Zugangspunkt (1) an einen Controller (6); am vertrauenswürdigen Zugangspunkt vom Controller Empfangen (10) von Testdaten zu jedem der aufgelisteten nächsten Nachbarn; Abfragen (11, 12, 14, 15) jedes Nachbarn unter Verwendung seiner jeweiligen Testdaten; Vergleichen (13, 16) einer Antwort mit einer erwarteten Antwort; und Rücksenden (17) einer Zuverlässigkeitsmeldung an den Controller, falls eine unerwartete Antwort empfangen wird.

2. Verfahren gemäß Anspruch 1, bei dem die Liste der nächsten Nachbarn durch mobile Endgeräte bestimmt wird, die von ihnen erkannte benachbarte Zugangspunkte melden.

3. Verfahren gemäß Anspruch 1, bei dem die Liste der nächsten Nachbarn von einem Nachbar-Erkennungsmechanismus (Neighbour Discovery Mechanism) anhand der Netzverbindungen zwischen Zugangspunkten in der Nachbarschaft des vertrauenswürdigen Zugangspunkts bestimmt wird.

4. Verfahren gemäß einem der vorhergehenden Ansprüche, bei dem die Testdaten Parameter für einen einzigen Algorithmus bzw. einen Sicherheitsalgorithmus enthalten, der für den Nachbarn spezifisch ist.

5. Verfahren gemäß einem der vorhergehenden Ansprüche, bei dem der Controller die Testdaten regelmäßig aktualisiert.

6. Verfahren gemäß einem der vorhergehenden Ansprüche, bei dem der Controller Berichte von einer Mehrzahl vertrauenswürdiger Zugangspunkte kombiniert, bevor er einen Zugangspunkt, der eine unerwartete Antwort gegeben hat, aus dem Netz nimmt.

7. Verfahren gemäß einem der vorhergehenden Ansprüche, bei dem das Netz entweder ein WLAN, ein Unternehmensfunknetz oder ein Mobiltelefonsystem der zweiten oder dritten Generation ist, bei dem der Zugangspunkt eine öffentliche bzw. unternehmensweite Kommunikationsinfrastruktur nutzen kann.

8. Verfahren gemäß einem der vorhergehenden Ansprüche, bei dem der Controller ein Authentifizierungs-, Autorisierungs- und Abrechnungsserver ist.

9. Verfahren gemäß einem der vorhergehenden Ansprüche, bei dem der Controller Teil eines Mobilkommunikationsnetzes ist.

10. Verfahren gemäß einem der vorhergehenden Ansprüche, bei dem die Zuverlässigkeitsmeldung nur dann zurückgegeben wird, wenn eine unerwartete Antwort empfangen wurde.

## Revendications

1. Méthode d'authentification des points d'accès (1, 2, 3) d'un réseau sans fil (4), la méthode comprenant les étapes consistant à envoyer (9) une liste des plus proches voisins (2, 3) d'un point d'accès de confiance (1) à un contrôleur (6) ; recevoir (10) du contrôleur, au niveau du point d'accès de confiance, des données d'essais relatives à chacun des plus proches voisins listés ; interroger (11, 12, 14, 15) chaque voisin en utilisant ses données d'essais respectives ; comparer (13, 16) une réponse à une réponse attendue ; et renvoyer (17) une indication de fiabilité au contrôleur si une réponse inattendue est reçue.

2. Méthode selon la revendication 1, dans laquelle la liste des plus proches voisins est déterminée par des terminaux mobiles rendant compte des points d'accès voisins qu'ils ont détectés.

3. Méthode selon la revendication 1, dans laquelle la liste des plus proches voisins est déterminée par un mécanisme de repérage des voisins utilisant une connectivité de réseau entre des points d'accès à proximité du point d'accès de confiance.

4. Méthode selon une quelconque revendication précédente, dans laquelle les données d'essais comprennent des paramètres destinés à un seul algorithme, ou bien un algorithme de sécurité spécifique au voisin.

5. Méthode selon une quelconque revendication précédente, dans laquelle le contrôleur met périodiquement à jour les données d'essais.

6. Méthode selon une quelconque revendication précédente, dans laquelle le contrôleur combine les comptes rendus provenant d'un certain nombre de points d'accès de confiance avant de déconnecter un point d'accès présentant une réponse inattendue.

7. Méthode selon une quelconque revendication précédente, dans laquelle le réseau comprend un système parmi un réseau local sans fil, un système de communication mobile d'entreprise ou un système cellulaire mobile de deuxième ou de troisième génération, dans lequel le point d'accès peut partager une infrastructure de communication publique ou d'entreprise.

8. Méthode selon une quelconque revendication précédente, dans laquelle le contrôleur comprend un serveur d'authentification, d'autorisation et d'administration comptable.

9. Méthode selon une quelconque revendication précédente, dans laquelle le contrôleur fait partie d'un réseau de communication mobile.

10. Méthode selon une quelconque revendication précédente, dans laquelle l'indication de fiabilité n'est renvoyée que si une réponse inattendue est reçue.
